# FASCICULE DE BREVET EUROPEEN

(11) **EP 3 642 667 B1**
(45) Date de publication et mention de la délivrance du brevet: **07.06.2023**
(21) Numéro de dépôt: 18735681.1
(22) Date de dépôt: 15.06.2018
(51) Int. Cl.: G02C 7/04

(54) **LENTILLE DE CONTACT D'ORTHOKÉRATOLOGIE POUR LE TRAITEMENT DE LA MYOPIE**
ORTHOKERATOLOGISCHE KONTAKTLINSE ZUR BEHANDLUNG VON MYOPIE
ORTHOKERATOLOGY CONTACT LENS FOR TREATING MYOPIA

(30) Priorité: 22.06.2017 FR 1755684
(43) Date de publication de la demande: 29.04.2020
(73) Titulaire: Laboratoire Precilens, 94000 Creteil (FR); Paune Fabre, Jaume, 08980 Sant Feliu de Llobregat (Barcelona) (ES)
(72) Inventeur: PAUNE FABRE, Jaume, 08980 Sant Feliu de Llobregat (Barcelona) (ES)
(74) Mandataire: Germain Maureau
(86) Numéro de dépôt international: PCT/FR2018/051431
(87) Numéro de publication internationale: WO 2018/234666

(56) Documents cités:
- EP-A1- 3 073 316
- WO-A2-2009/149116
- JP-A- 2006 043 150
- JP-A- 2008 112 121
- TW-B- I 588 562
- US-A- 5 695 509
- US-A1- 2002 186 344
- Douthwaite W. A.: "The contact lens" In: "Contact Lens Optics and Lens Design (Third Edition)", 1 January 2006 (2006-01-01), Elsevier, XP093016979, pages 27-56,
- Douthwaite W. A.: "Chapter 9 - Miscellaneous features" In: "Contact Lens Optics and Lens Design (Third Edition)", 1 January 2006 (2006-01-01), Butterworth-Heinemann, XP093016983, pages 288-318,
- Mountford John ET AL: "Chapter 1 - History and General Principles" In: "Orthokeratology, Principles and Practice", 1 January 2004 (2004-01-01), Butterworth-Heinemann, XP093017028, pages 1-16,

## Description

La présente invention se rapporte à une lentille de contact d'orthokératologie pour traiter la myopie, qui permet de diminuer ou d'inhiber la progression de la myopie chez un patient en raison de la configuration de sa surface postérieure, qui est conçue pour modifier la surface de la cornée de manière à induire une augmentation suffisante, contrôlée et constante de la puissance cornéenne positive dans une zone annulaire périphérique comprise entre 10° et 30° par rapport à l'axe optique et, par conséquent, déplacer optiquement l'image créée dans la rétine périphérique, devant la rétine de cet œil.

La surface postérieure d'une lentille de contact est la surface configurée pour être au contact de la cornée de l'oeil, en position d'utilisation, en opposition à la surface antérieure qui est destinée à être au contact de l'extérieur. On l'appellera également côté postérieur.

Dans la suite du texte, la cornée sera appelée indifféremment épithélium cornéen ou cornée.

La puissance cornéenne positive exprime la puissance de réfraction de la première surface optique de l'oeil et est équivalente à la valeur réciproque ou inverse de sa distance focale exprimée en mètres. La cornée est le premier élément réfractif de l'oeil, avec une puissance de signe positif qui correspond à des surfaces convergentes. Une augmentation de la puissance cornéenne en un point ou zone, déterminé impliquera une augmentation de la puissance positive. Ceci a pour effet d'avancer le plan focal et donc donne une focalisation de l'image dans un plan plus proche de la cornée.

La surface « cornée » est une surface que l'on peut représenter selon quatre zones annulaires distinctes et juxtaposées :
- une zone centrale, dite zone optique, d'un diamètre de l'ordre de 3 mm,
- un premier anneau para central ou mi-périphérique, d'une largeur de l'ordre de 2 mm,
- un deuxième anneau, également appelé zone annulaire périphérique, d'une largeur de l'ordre de 2 mm,
- un troisième anneau, dit anneau limbal, dont la largeur dépend de la position de la zone sclère.

La zone sclère est la zone de transition entre la cornée et le sclère.

### Arrière-plan de l'invention

Sont connues des lentilles de contact d'orthokératologie, appelées également lentilles à géométrie inverse, destinées à modifier la surface de la cornée et à corriger les erreurs de réfraction oculaire pendant le sommeil. Ce sont des lentilles avec une structure qui permet de distribuer la pression hydrodynamique à travers l'épithélium cornéen pendant le sommeil de manière contrôlée, amenant ainsi la forme de la cornée à s'adapter à la forme de la lentille. Ces lentilles présentent donc une forme adaptée pour distribuer la pression hydrodynamique à travers l'épithélium cornéen pendant le sommeil, de manière contrôlée. Ces lentilles modifient la géométrie et la courbure cornéennes antérieures, produisant un changement de réfraction dans la zone où se trouve l'axe optique qui corrige la vision de loin. Simultanément, elles produisent une augmentation du pouvoir réfringent dans la zone cornéenne mi-périphérique qui modifie la focalisation des images périphériques ou latérales projetées sur la rétine périphérique ou latérale (Queirós, A .; Gonzàlez-Méijome, J. M. ; Jorge, J. ; Villa-Collar, C. ; Gutiérrez, A. R. ; Peripheral refraction in myopie patients after orthokeratology. Optometry and Vision Science (2010), 87(5), 323-329. http://doi.org/10.1097/oPx.Ob013e3181d951 f7.

Des études sur l'oeil myope ont montré que, par rapport à la réfraction mesurée sur l'axe optique central, ledit oeil a moins de pouvoir réfringent pour des images visuelles périphériques qui sont focalisées sur la rétine périphérique, produisant une défocalisation périphérique ou un flou de l'image derrière la rétine (également appelé oeil hypermétrope) lorsque la réfraction dans l'axe optique est compensée par des lentilles de contact ou des verres sphériques communs et le patient se focalise sur l'objet d'intérêt avec la rétine centrale. Cette image floue dans la rétine périphérique a été décrite dans des études réalisées sur des animaux comme la cause optique de la progression de la myopie, puisqu'il a été démontré, par des études réalisées sur des animaux, que la réfraction périphérique interfère avec et régit le modèle de croissance oculaire des yeux myopes (Smith, E. L. Optical treatment strategies to slow myopia progression : effects of the visual extent of the optical treatment zone. Experimental Eye Research 2010, 114, 77-88. http://doi.org/l0.l016/j.exer.2012.11.019).

Par conséquent, des lentilles qui diminuent ou ralentissent la progression de la myopie devraient avoir une puissance optique plus positive sur leur périphérie par rapport à celle de l'axe optique, ce qui leur permet, selon les études susmentionnées, de situer l'image périphérique devant la rétine chez la plupart de la population myope, bien qu'idéalement, elles doivent être personnalisées, en les adaptant à la personne en cours de traitement. Il a également été décrit que, plus la zone qui reste focalisée devant la rétine latérale est grande, plus l'efficacité est importante (Benavente-Pérez, A. ; Nour, A. ; Troilo, D. Axial Eye Growth and Refractive Error Development Can Be Modified by Exposing the Peripheral Retina to Relative Myopie or Hyperopic Defocus. Investigative Ophthalmology & Visual Science, 55(10), 6765-73. http://doi.org/l0.1167/iovs.14-14524).

Certains traitements optiques, tels que l'orthokératologie, qui inversent le profil de réfraction périphérique dans les yeux myopes, ont été identifiés comme des moyens possibles pour contrôler l'augmentation excessive de la longueur axiale de l'oeil myope (Faria-Ribeiro, M. ; Queirós, A. ; Lopes-Ferreira, D. ; Jorge, J. ; & Gonzàlez-Méijome, J. M. Peripheral refraction and retinal contour in stable and progressive myopia. Optometry and Vision Science 2013, 90(1), 9-15. http://doi.org/l0.l097/0PX.ObOl3e318278153c.

Il est connu que, dans le cas de l'orthokératologie, la quantité de changement de la cornée centrale et mi-périphérique est directement liée à la quantité de myopie à corriger (Queirós, A. ; Gonzàlez-Méijome, J. M. ; Jorge, J. ; Villa-Collar, C. ; Gutiérrez, A. R. Peripheral refraction in myopie patients after orthokeratology. Optometry and Vision Science (2010), 87(5), 323-329. http://doi.org/l0.l097/0PX.ObOl3e3181d951f7), par conséquent dans les cas de myopie légère et/ou faible, l'efficacité du contrôle de la myopie diminue lorsque la quantité optimale d'augmentation de la courbure dans la cornée mi-périphérique n'est pas obtenue (Zhong, Y. ; Chen, Z. ; Xue, F. ; Zhou, J. ; Niu, L. Corneal Power Change Is Predictive of Myopia Progression in Orthokeratology. Optometry & Vision Science. (2014), 91(4), 404-411. http://doi.org/l0.1097/0PX.0000000000000183).

Les contributions scientifiques susmentionnées ont donné naissance à des dispositifs optiques qui sont l'objet de divers brevets.

Le brevet US7025460 se focalise sur le contrôle de la réfraction en dehors de l'axe optique, en manipulant la courbure de champ d'une image, pour déplacer l'image périphérique devant la rétine périphérique. Sa proposition comprend une zone de vision centrale non modifiée et une zone de traitement périphérique, à cause desquelles elle présente l'inconvénient de laisser la zone de vision centrale non modifiée et de ne pas placer l'image rétinienne en avant.

Par conséquent, bien que le brevet susmentionné puisse corriger la myopie différemment dans la fovéa, c'est-à-dire la région de vision centrale, et dans des zones périphériques de la rétine, afin de fournir une bonne vision dans l'axe optique tout en formant des images provenant de la périphérie visuelle sur ou devant la rétine, ce brevet porte sur des lentilles pour port journalier ayant deux zones de vision clairement délimitées. Ces lentilles donnent naissance à une bifocalité ou à une image double, ce qui ne fournit pas une focalisation constante devant et partout dans l'ensemble de la rétine, et ce qui continue à permettre l'activation des mécanismes qui génèrent l'allongement oculaire.

Le brevet US20150124212 divulgue une conception de lentille d'orthokératologie ayant une zone centrale plus petite que les lentilles classiques et avec une courbe adjacente plus incurvée que la lentille précédente, dans le but de générer une zone d'addition (augmentation du pouvoir réfringent) dans la zone pupillaire. L'inconvénient de ce type de lentille est qu'elle ne présente pas permet pas de contrôler ou déterminer la quantité de changement induit dans la puissance cornéenne mi-périphérique et, par conséquent, ne sera pas efficace dans les myopies faibles. De plus, la zone de défocalisation myopique, qui a une puissance plus positive, est située à l'intérieur de la zone pupillaire, ce qui a pour inconvénient de générer des halos et un inconfort visuel.

Les documents US2002186344A1, JP2008112121A et EP3073316A1 divulguent également des lentilles d'orhokératologie ayant des zones d'accumulation de larmes.

De telles lentilles ne contrôlent ni la quantité d'addition de puissance cornéenne à appliquer ni l'emplacement par rapport à chaque patient. Cela laisse, en particulier, des myopies faible ou naissantes inférieures à quatre dioptries sans un bon effet de contrôle de progression.

En outre, il est connu que, afin d'obtenir un bon résultat avec un traitement d'orthokératologie, en particulier dans le cas de l'orthokératologie nocturne, il est essentiel que la lentille soit parfaitement centrée pendant la nuit.

Les lentilles de contact d'orthokératologie connues ont des courbes dites d'alignement situées dans les zones les plus périphériques de la lentille, dont la fonction est de centrer la lentille. Malheureusement, ces courbes résultantes, qui ont le même rayon que la zone cornéenne périphérique où elles se trouvent, ne sont pas totalement efficaces à cet égard, puisqu'elles ne permettent pas l'utilisation de forces hydrodynamiques et ne contribuent donc pas efficacement à l'objectif poursuivi.

Il semble nécessaire d'offrir une alternative à l'état de l'art qui comble les lacunes qui s'y trouvent, en fournissant une lentille de contact d'orthokératologie qui permet de diminuer la progression de la myopie chez un patient en raison de la configuration de sa surface postérieure, en plus de son alignement correct par rapport à l'axe optique sur la surface de la cornée de l'œil.

### Description de l'invention

L'objectif de la présente invention est de fournir une lentille de contact d'orthokératologie destinée à être utilisée sur la cornée d'un oeil pour traiter la myopie, qui résout les inconvénients susmentionnés et présente les avantages décrits ci-dessous.

Conformément à cet objectif, selon un premier aspect, la présente invention se rapporte à une lentille de contact d'orthokératologie comme défini dans la revendication 1, ladite lentille étant une lentille rigide à géométrie inverse, qui comprend un côté antérieur incurvé et un côté postérieur, où ledit côté postérieur définit :
- une zone centrale adaptée pour coïncider avec la zone optique de l'oeil, ; et
- une zone périphérique, concentrique à ladite zone centrale, qui comprend une partie annulaire définissant une zone d'accumulation de larmes configurée pour exercer une pression hydrodynamique négative sur la surface de la cornée en moulant la surface de la cornée et en créant un anneau d'augmentation de puissance positive ;
caractérisée en ce que la partie annulaire comporte :
- un premier segment qui s'étend de manière concentrique par rapport à la zone centrale, radialement par rapport au centre géométrique qui définit la courbure du côté postérieur, vers le côté antérieur incurvé jusqu'à une ligne limite annulaire ; et
- un deuxième segment qui s'étend à partir de ladite ligne limite annulaire, de manière concentrique par rapport à la zone centrale, le deuxième segment s/étendant jusqu'à un point de contact avec la surface de la cornée ;
où le premier segment, le deuxième segment et la zone centrale forment une ligne brisée, de sorte que la ligne limite annulaire définisse une crête pour la zone d'accumulation de larmes ayant une hauteur de larme.

La crête est donc une intersection de deux segments de droites.

Les premier et deuxième segments forment la crête dont le sommet est un point singulier.

La hauteur de larme correspond à la longueur du segment de la ligne limite annulaire compris entre le sommet de la crête et la cornée, lorsque la lentille est en position d'utilisation.

De cette manière, la position et la quantité de puissance cornéenne à appliquer peuvent être contrôlées, ce qui se traduit par la modification exacte de la focalisation de l'image sur la rétine périphérique, en maintenant la correction optique nécessaire pour chaque utilisateur ou patient. Avec ladite lentille, des images provenant de certains champs visuels de l'oeil sont projetées sur la rétine périphérique, devant la rétine dudit oeil.

La zone optique de l'oeil peut également être appelée zone visuelle ou zone de vision de l'œil.

En outre, une ligne brisée peut également être appelée ligne polygonale ou polyligne.

Par ailleurs, la surface de la cornée peut également être appelée épithélium cornéen.

De préférence, la valeur de la hauteur de larme se trouve dans une plage allant de 30 à 150 microns. Par conséquent, la zone d'accumulation de larmes peut acquérir différentes hauteurs en fonction de la quantité de puissance cornéenne à appliquer, de sorte qu'elle permette de déformer la surface de la cornée de l'oeil, en augmentant la pression hydrodynamique négative à l'intérieur de l'accumulation de larmes, créant ainsi l'anneau d'augmentation de puissance positive.

La ligne brisée est formée par le premier segment, le deuxième segment et la zone centrale.

Ainsi, la hauteur de larme peut être modifiée et maitrisée sans modifier la courbure de la zone centrale.

La zone périphérique, et plus précisément la partie annulaire, est modifiée indépendamment de la zone centrale.

Selon cette configuration, la zone centrale et le premier segment ont une intersection formée par un point singulier.

Ainsi, la hauteur de larme peut être modifiée et maitrisée de manière précise.

Également de préférence, la ligne limite annulaire est située à une distance radiale comprise entre 1,5 mm et 3,5 mm par rapport au centre géométrique de la zone centrale.

De cette manière, ladite ligne limite annulaire sera située à une distance radiale par rapport à l'axe optique de l'oeil, égale à un axe visuel de l'oeil compris entre 10° et 30°.

De préférence, la partie annulaire est configurée pour induire une augmentation de puissance positive dans une région comprise entre 10° et 30°, créant une réfraction positive qui place l'image périphérique dans ladite région devant la rétine dudit oeil.

Ainsi, la partie annulaire permet aux images provenant des axes visuels situés entre 10° et 30° par rapport à l'axe optique d'être projetées sur une région plus en avant de la rétine, indépendante de la zone centrale de la rétine.

La zone centrale est formée par une ligne courbe.

De préférence, ladite zone centrale est essentiellement plate.

De préférence, la zone centrale est essentiellement incurvée par rapport à la réfraction centrale à corriger. De cette manière, la zone centrale s'adapte à la courbure de la cornée. De plus, l'épaisseur de la lentille est essentiellement réduite, de sorte que la lentille soit facile à utiliser et confortable pour l'utilisateur.

Néanmoins, selon un mode de réalisation alternatif, la zone périphérique comprend également une partie annulaire supplémentaire définissant une zone d'accumulation de larmes supplémentaire configurée pour exercer une pression hydrodynamique négative sur la surface de la cornée en moulant la surface de la cornée et en créant un anneau supplémentaire d'augmentation de puissance positive, qui comporte :
- un premier segment qui s'étend de manière concentrique par rapport à la zone centrale, radialement par rapport au centre géométrique qui définit la courbure du côté postérieur, vers le côté antérieur incurvé jusqu'à une ligne limite annulaire supplémentaire ; et
- un deuxième segment qui s'étend à partir de ladite ligne limite annulaire, de manière concentrique par rapport à la zone centrale, le deuxième segment étant configuré pour s'étendre jusqu'à un point de contact avec la surface de la cornée ;
où le premier segment et le deuxième segment forment une ligne brisée, de sorte que la ligne limite annulaire de la partie annulaire supplémentaire définisse une crête pour la zone d'accumulation de larmes supplémentaire ayant une hauteur de larme.

De cette manière, une partie annulaire supplémentaire est générée dans une zone d'accumulation de larmes supplémentaire. Ladite zone d'accumulation de larmes supplémentaire génère une pression négative sur l'épithélium cornéen lors de l'augmentation des forces hydrodynamiques exercées sur ladite zone. De sorte qu'elle améliore l'appui de la lentille sur la cornée, en diminuant le mouvement et le déplacement de la lentille sur celle-ci, et en favorisant le centrage correct de la lentille lors de son utilisation.

De plus, cette partie annulaire supplémentaire influence également le moulage de la zone périphérique de la cornée lors de la création de l'anneau supplémentaire d'augmentation de puissance qui contribue à mettre en avant les images dans la rétine périphérique, en particulier dans les yeux ayant un diamètre de pupille plus grand que le diamètre standard ou dans des conditions de lumière faible, de sorte que ladite lentille augmente et améliore l'effet du traitement de la myopie.

De la même manière que précédemment, la crête de la partie annulaire supplémentaire est une intersection de deux segments de droites.

Les premier et deuxième segments de la partie annulaire supplémentaire forment la crête pour la zone d'accumulation de larmes supplémentaire, dont le sommet est un point singulier.

La hauteur de larme de la partie annulaire supplémentaire correspond à la longueur du segment de la ligne limite annulaire de ladite partie annulaire supplémentaire compris entre le sommet de la crête et la cornée, lorsque la lentille est en position d'utilisation.

De préférence, la zone d'accumulation de larmes supplémentaire a une hauteur de larme inférieure à la hauteur de larme de la zone d'accumulation de larme précédemment décrite.

La hauteur de larme (h2) de la zone d'accumulation de larmes supplémentaire est avantageusement comprise entre 10 et 30 microns.

De cette manière, un anneau supplémentaire d'augmentation de puissance est créé à l'intérieur de la zone d'accumulation de larmes supplémentaire qui n'interfère pas avec des images provenant d'axes visuels compris entre 10° et 30° par rapport à l'axe optique.

Également de préférence, la ligne limite annulaire de la partie annulaire supplémentaire est située à une distance radiale comprise entre 2,5 mm et 5 mm par rapport au centre géométrique de la zone centrale.

De préférence, dans la zone périphérique, la lentille comprend un segment adjacent à la partie annulaire supplémentaire qui s'étend vers le côté antérieur incurvé jusqu'à un bord de liaison annulaire avec celui-ci, formant le ménisque lacrymal de bord qui permet l'échange de larme sous la lentille lors du clignement.

De cette manière, la larme peut circuler sous la lentille, lubrifiant, nettoyant et hydratant l'oeil et s'accumulant dans les accumulations de larmes pour former les parties annulaires susmentionnées.

En variante, la lentille de contact comprend une ou plusieurs partie(s) annulaire(s) additionnelle(s) disposée(s) entre la partie annulaire et la partie annulaire supplémentaire.

De cette manière, la lentille peut créer une ou plusieurs partie(s) annulaire(s) au moyen des accumulations de larmes pour corriger des défauts de la vision qui peuvent être causés par des images provenant d'axes visuels différents de ceux compris entre 10° et 30° par rapport à l'axe optique.

Selon un mode de réalisation alternatif, la zone centrale comprend une partie circulaire interne et une partie annulaire externe, toutes deux disposées de manière concentrique entre elles et séparées par une ligne limite annulaire interne, où ladite partie circulaire interne est définie par une courbe ayant un rayon de courbure inférieur au côté antérieur incurvé de la lentille, avec ladite ligne limite annulaire interne configurée pour être en contact avec la surface de la cornée, de sorte que la partie circulaire interne définisse une zone d'accumulation de larmes interne qui exerce une pression hydrodynamique négative sur l'épithélium cornéen, moulant la surface de la cornée et créant une demi-sphère d'augmentation de puissance qui définit une crête pour ladite zone d'accumulation de larmes interne ayant une hauteur de larme.

De cette manière, une demi-sphère d'augmentation de puissance est formée dans la partie circulaire interne en raison de la pression hydrodynamique négative exercée sur la surface de la cornée de manière à permettre la réfraction des images provenant de la zone optique qui coïncide avec l'axe optique dans une partie plus en avant de la rétine.

Avantageusement, la valeur de la hauteur de larme de la zone d'accumulation de larmes interne se trouve dans une plage allant de 5 à 50 microns, de sorte que la hauteur de larme puisse être adaptée à différentes valeurs de myopie selon l'utilisateur.

La lentille revendiquée sera destinée à être utilisée sur la surface de la cornée d'un oeil d'un être humain pendant une période nocturne ou de repos prolongée de l'oeil, de sorte que la lentille déforme la surface de la cornée, créant des anneaux ou des demi-sphères d'augmentation de puissance positive qui, lors de l'enlèvement de la lentille et pendant une période de jour, lesdits anneaux ou lesdites demi-sphères permettront la réfraction des images provenant desdits axes visuels dans une zone avancée de la rétine, contrôlant la myopie de l'oeil et l'augmentation de la longueur axiale de l'œil.

Dans la présente invention, on entend par période nocturne une période de sommeil et/ou de repos prolongée des yeux comprise entre six et huit heures. De même, on entend par période de jour, une période durant laquelle l'oeil fonctionne de sorte qu'il reçoive un stimulus visuel.

De même, dans la présente invention, on entend par utilisateur ou patient, un être humain ayant un défaut visuel myopique susceptible d'utiliser la lentille de contact objet de l'invention sur la surface de sa cornée.

Dans la présente invention, on entend par axe optique, une ligne droite imaginaire qui traverse le centre de la pupille, le centre du cristallin et le centre de l'œil.On entend par axe visuel, une ligne droite imaginaire selon un angle défini par rapport à l'axe optique.

De même, dans la présente invention, on entend par cornée, la partie avant transparente de l'oeil qui couvre l'iris, la pupille et la chambre antérieure, où ladite cornée est formée par des strates ou couches différentes et l'épithélium cornéen est la strate disposée de manière à être la plus éloignée du centre du globe oculaire.

### Brève description des dessins

Pour une meilleure compréhension de ce qui est décrit ici, un ensemble de dessins qui, schématiquement et à titre d'exemple non limitatif uniquement, représentent deux cas pratiques de différents modes de réalisation est annexé.
La figure 1 montre une vue en coupe d'une lentille de contact d'orthokératologie de l'état de l'art.
La figure 2 montre une vue schématique en coupe de la lentille de contact d'orthokératologie de la présente invention, pour un exemple de mode de réalisation.
La figure 3 montre une vue en plan de dessus de la lentille de contact d'orthokératologie de la présente invention, pour le même exemple de mode de réalisation de la figure 1.
La figure 4 montre une vue schématique en coupe de la lentille de la présente invention disposée sur la surface de la cornée d'un oeil humain, pour le même exemple de mode de réalisation de la figure 2.
La figure 5 montre une vue schématique en coupe d'un oeil humain traité avec la lentille de la présente invention, illustrant le moulage de la surface de la cornée causé par la lentille de la présente invention et le point où l'image périphérique est projetée, pour le même exemple de mode de réalisation de la figure 2.
La figure 6 montre un graphique illustrant les courbes d'augmentation de puissance cornéenne par rapport à l'axe optique déterminées pour : a) la lentille de contact de la présente invention, b) une lentille de l'état de l'art, et c) la ligne de base de puissance cornéenne.
La figure 7 montre les cartes topographiques déterminées pour : D) une lentille de contact de la présente invention, et E) une lentille de contact de l'état de l'art.
La figure 8 montre les images obtenues après ajout d'une solution de fluorescéine sodique à l'oeil d'un patient en présence d'une lentille de contact. Dans le cas de l'image G, l'oeil est représenté en utilisant la lentille de contact de la présente invention et, dans le cas de l'image F, l'oeil est représenté avec la lentille de contact de l'état de l'art.
La figure 9 montre une vue schématique en coupe de la lentille de contact d'orthokératologie de la présente invention, pour un mode de réalisation alternatif.
La figure 10 montre une vue en plan de dessus de la lentille de contact d'orthokératologie de la présente invention pour le même exemple de mode de réalisation de la figure 9.
La figure 11 montre une vue schématique en coupe de la lentille de la présente invention disposée sur la cornée d'un oeil humain pour le même exemple de mode de réalisation de la figure 9.
La figure 12 montre une vue schématique en coupe d'un oeil humain traité avec la lentille de la présente invention, illustrant le moulage de la surface de la cornée causé par la lentille de la présente invention, et le point où l'image périphérique est projetée pour le même exemple de mode de réalisation de la figure 9.
La figure 13 montre les images obtenues après ajout d'une solution de fluorescéine sodique à l'oeil d'un patient en présence d'une lentille de contact. Dans le cas de l'image M, l'oeil est représenté en utilisant la lentille de contact de la présente invention pour l'exemple de mode de réalisation de la figure 2 et, dans le cas de l'image L, l'oeil est représenté avec la lentille de contact de l'état de l'art.

### Description d'un mode de réalisation préféré

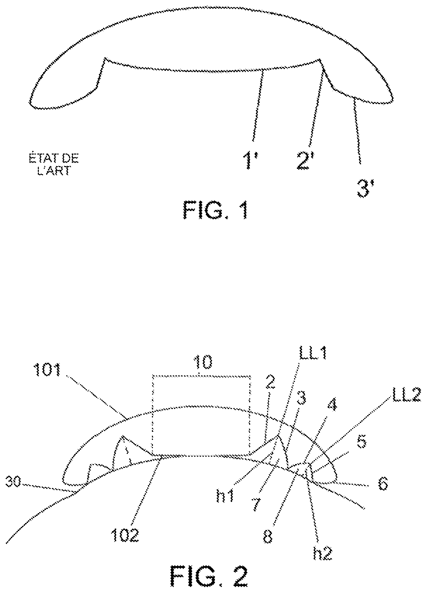

La présente invention, comme le montrent les figures 1 à 12, propose une lentille de contact d'orthokératologie 100 pour le traitement de la myopie.

Ce qui suit est une description d'un mode de réalisation préféré représenté dans les figures 2 à 8 de la présente invention se rapportant à la lentille de contact 100 susmentionnée et qui comprend un côté antérieur incurvé 101 et un côté postérieur 102 qui est configuré pour être appliqué sur un oeil, où ledit côté postérieur 102 définit :
- une zone centrale 10 configuré pour coïncider avec la zone optique ou visuelle de l'oeil, où ladite zone centrale 10 est configurée pour induire un moulage de la surface de la cornée 30 en exerçant une pression hydrodynamique positive sur l'épithélium cornéen ; et
- une zone périphérique 20, concentrique à ladite zone centrale 10, qui comprend une partie annulaire 11 qui comporte :
- un premier segment 2 qui s'étend de manière concentrique par rapport à la zone centrale 10 jusqu'à une ligne limite annulaire LL1 ; et
- un deuxième segment 3 qui s'étend à partir de ladite ligne limite annulaire LL1, lors de l'utilisation, dans la direction de la surface de la cornée 30 jusqu'à une extrémité de contact avec celle-ci ;

où ladite partie annulaire 11 définit une zone d'accumulation de larmes 7 qui est configurée pour exercer une pression hydrodynamique négative sur l'épithélium cornéen, en moulant la surface de la cornée 30 et créant un anneau d'augmentation de puissance positive 13 ;
ledit premier segment 2 s'étendant également vers ledit côté antérieur incurvé 101, radialement par rapport au centre géométrique qui définit la courbure du côté postérieur 102, de sorte que ladite ligne limite annulaire LL1 définisse une crête pour ladite zone d'accumulation de larmes 7 ayant une hauteur de larme h1.

La zone centrale 10 est formée par une ligne courbe adaptée pour coïncider avec la zone optique de l'œil.

Le premier segment 2 s'étend radialement par rapport au centre géométrique qui définit la courbure du côté postérieur 102, vers le côté antérieur incurvé 101.

Le deuxième segment 3 s'étend de manière concentrique par rapport à la zone centrale10. Il est configuré pour s'étendre jusqu'à un point de contact avec la cornée 30.

En outre, la zone périphérique 20 comprend également une partie annulaire supplémentaire 12 définissant une zone d'accumulation de larmes supplémentaire 8 configurée pour exercer une pression hydrodynamique négative sur l'épithélium cornéen en moulant la surface de la cornée et en créant un anneau supplémentaire d'augmentation de puissance positive 14.

Cette partie annulaire supplémentaire 12 comporte :
- un premier segment 4 qui s'étend de manière concentrique par rapport à la zone centrale 10, radialement par rapport au centre géométrique qui définit la courbure du côté postérieur 102, vers le côté antérieur incurvé 101 jusqu'à une ligne limite annulaire LL2 ; et
- un deuxième segment 5 qui s'étend à partir de ladite ligne limite annulaire LL2, de manière concentrique par rapport à la zone centrale 10, le deuxième segment 5 étant configuré pour s'étendre jusqu'à un point de contact avec la cornée 30 ;
où le premier segment 4 et le deuxième segment 5 forment une ligne brisée, de sorte que la ligne limite annulaire LL2 de la partie annulaire supplémentaire 12 définisse une crête pour la zone d'accumulation de larmes supplémentaire 8 ayant une hauteur de larme h2.

La ligne courbe formant la zone centrale 10, le premier segment 2 et le deuxième segment 3 de la partie annulaire 11, et le premier segment 2 et le deuxième segment 3 de la partie annulaire supplémentaire 12, forment une ligne brisée.

La lentille de contact 100 comprend deux côtés : un côté antérieur incurvé 101 et un côté postérieur 102. Ledit côté postérieur 102 est destiné à être positionné sur la surface de la cornée 30 de l'oeil, entrant en contact avec celui-ci, de sorte que la zone centrale 10 de la lentille de contact 100 coïncide avec la zone optique ou visuelle de l'œil (voir figure 2).

De même, on peut observer qu'entre la surface de la cornée 30 et la lentille de contact 100, des zones ou cavités d'accumulation de larmes 7, 8 sont créées avec leurs hauteurs de larme h1 et h2 respectives. Lesdites zones d'accumulation 7, 8 peuvent faire varier leurs hauteurs de larme h1, h2 en fonction du degré de myopie du patient ou de l'utilisateur (voir figure 2).

La zone d'accumulation de larmes 7 est disposée à l'intérieur de la partie annulaire 11, de sorte qu'un premier segment 2 s'étende de manière concentrique par rapport à la zone centrale 10 jusqu'à une ligne limite annulaire LL1 et un deuxième segment 3 s'étende à partir de la ligne limite annulaire LL1 dans la direction de la surface de la cornée 30, en particulier de l'épithélium cornéen, jusqu'à une extrémité de contact de celle-ci (voir figure 2).

La zone d'accumulation de larmes 8 de la partie annulaire supplémentaire 12 est définie à l'intérieur de ladite partie annulaire supplémentaire 12, de sorte que le premier segment 4 s'étende de manière concentrique par rapport à la zone centrale 10 vers une ligne limite annulaire LL2 et le deuxième segment 5 s'étende à partir de la ligne limite annulaire LL2 dans la direction de la surface de la cornée 30 lorsque la lentille est en position d'utilisation, en particulier de l'épithélium cornéen, jusqu'à une extrémité de contact de celle-ci (voir figure 2).

Comme on peut l'observer dans la figure 2, un segment 6 adjacent à la partie annulaire supplémentaire 12 s'étend vers le côté antérieur incurvé 101 jusqu'à un bord de liaison annulaire de celui-ci, formant le ménisque lacrymal de bord 17, qui permet un échange de larme sous la lentille de contact 100 lors du clignement, de sorte qu'elle lubrifie, nettoie, hydrate l'oeil et s'accumule dans les zones d'accumulation de larmes 7, 8 pour former les parties annulaires susmentionnées 11, 12 (voir figure 2).

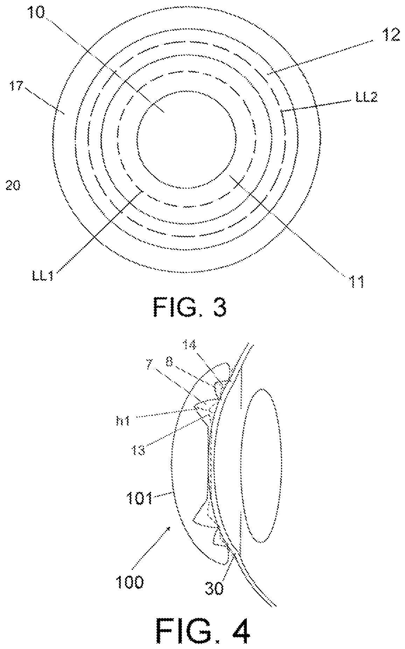

La lentille de contact 100 est divisée en différentes zones concentriques entre elles. Dans le mode de réalisation décrit, la zone centrale 10 occupe la position centrale suivie d'une zone périphérique 20 qui s'étend radialement vers l'extérieur de la lentille de contact 100 et qui comprend une partie annulaire 11, une partie annulaire supplémentaire 12 et le ménisque lacrymal de bord 17 (voir figure 3).

Comme décrit ci-dessus, la lentille de contact 100 déformera la surface de la cornée 30, créant un premier anneau d'augmentation de puissance 13, appelé également anneau d'augmentation de puissance 13, à l'intérieur de la zone d'accumulation de larmes 7 et un deuxième anneau d'augmentation de puissance 14, appelé également anneau d'augmentation de puissance supplémentaire, à l'intérieur de la zone d'accumulation de larmes supplémentaire 8. Le pouvoir réfringent qui sera généré par lesdits anneaux d'augmentation de puissance 13, 14 sera déterminé par la hauteur de larme h1, h2. Plus la hauteur de larme h1, h2 est élevée, plus la pression hydrodynamique exercée sur la surface de la cornée 30 est importante et, par conséquent, plus les anneaux d'augmentation de puissance 13, 14 sont grands. De même, la taille des anneaux d'augmentation de puissance 13, 14 influencera le pouvoir réfringent qu'ils créeront : plus les anneaux d'augmentation de puissance 13, 14 sont grands, plus le pouvoir réfringent est important (voir figure 4).

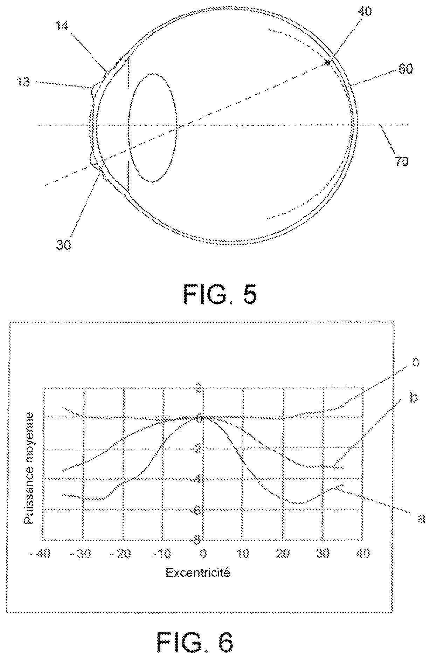

Une fois que la lentille de contact 100 a été déposée sur la surface de la cornée 30 et a été laissée agir pendant une période nocturne, la surface de la cornée 30 de l'oeil de l'utilisateur ou du patient deviendra déformée en conséquence de la pression hydrodynamique exercée sur l'épithélium cornéen, créant des premier et deuxième anneau d'augmentation de puissance 13, 14 sur la surface de la cornée 30 (voir figure 5).

Afin d'obtenir un effet de contrôle de myopie adéquat, la zone centrale 10 et la partie annulaire 11 de la lentille de contact 100 de la présente invention sont situées de préférence dans le 30° du champ de vision de l'œil. Ladite position permet, lors du moulage de l'épithélium cornéen de manière contrôlée et précise, la projection de l'image périphérique devant la rétine 60 dans une zone périphérique comprise entre 10° et 30° de l'axe optique 70, favorisant ainsi la diminution ou l'inhibition de la progression de la myopie (voir figure 5).

En contrôlant la hauteur de larme h1 de la zone d'accumulation de larmes 7, un changement contrôlé est obtenu dans la surface de la cornée 30, comme le montre la figure 5, ce qui permet, indépendamment des dioptries du patient ou d'une valeur calculée pour corriger le défaut de réfraction du patient dans l'axe optique 70, de garantir un avancement des images créées dans la rétine périphérique, représentée par le point 40 de la figure 5, devant la rétine 60 de l'oeil, ce qui favorise la diminution de la progression de la myopie d'un patient.

En vue d'obtenir l'effet poursuivi, le premier anneau d'augmentation de puissance 13, formé sur la surface de la cornée 30, grâce à la configuration de la partie annulaire 11 de la lentille, doit produire une augmentation de la puissance cornéenne comprise entre 4 et 8 dioptries. À cette fin, comme le montre la figure 4, la zone d'accumulation de larmes 7 doit présenter une hauteur de larme h1 qui, par rapport à la ligne limite annulaire LL1, a des valeurs se trouvant dans une plage allant de 60 microns à 150 microns.

Les valeurs de hauteur h1 supérieures à celles indiquées présentent l'inconvénient de modifier la réfraction centrale et d'entraîner des déséquilibres visuels chez le patient, et des valeurs de hauteur h1 inférieures à celles indiquées présentent l'inconvénient de ne pas façonner de manière adéquate la cornée 30 et, donc, l'image périphérique ne serait pas projetée devant la rétine 60 et, par conséquent, l'un des effets recherchés, tels que la diminution de la progression de la myopie, n'est pas obtenu.

De plus, la zone d'accumulation de larmes 7 et, par conséquent, la partie annulaire 11 doit être disposée à une distance comprise entre 1,5 mm et 3 mm de l'axe optique 70 de l'oeil, de sorte que la partie annulaire 11 soit située dans les 30° du champ visuel de l'oeil (voir figure 2).

Compte tenu du fait que le rayon de courbure de la cornée 30 est différent chez chaque patient, les segments 2, 3 de la partie annulaire 11 s'ajustent de sorte que la déformation de la surface de la cornée 30 causée par la première partie annulaire 11 se produise en la quantité souhaitée, entre 4 et 8 dioptries, et dans un emplacement dans les 30° par rapport à l'axe optique 70 (voir figure 4).

Ceci garantit que le premier anneau d'augmentation de puissance 13 est positionné dans la zone mi-périphérique et non pas dans la zone pupillaire, ce qui induirait la création d'une image double dans la zone de fovéa, avec la déficience qui s'ensuit de la vision centrale du patient.

En outre, la zone d'accumulation de larmes supplémentaire 8 définie par la partie annulaire supplémentaire 12 aura une hauteur de larme h2, inférieure à la hauteur h1 de la première zone d'accumulation de larmes 7, ce qui induit la création du deuxième anneau d'augmentation de puissance 14 sur la surface de la cornée 30, qui aura une augmentation de puissance inférieure à celle du premier anneau 13. De cette manière, le mouvement de la lentille 100 et son déplacement sur la surface de la cornée 30 diminuent avec la partie annulaire supplémentaire, favorisant le centrage adéquat de celle-ci, en plus de contribuer à l'avancement des images dans la rétine périphérique dans les yeux ayant des diamètres de pupille plus grands que le diamètre standard ou dans des conditions de lumière faible (voir figure 4). La zone d'accumulation de larmes supplémentaire 8 a une hauteur de larme h2 comprise entre 10 et 30 microns, ladite hauteur h2 étant inférieure à h1.

Afin d'obtenir l'effet de créer les premier et deuxième anneau d'augmentation de puissance 13, 14, la zone d'accumulation de larmes supplémentaire 8 induite par la partie annulaire 12 sera de préférence disposée à une distance radiale comprise entre 2,5 mm et 5 mm de l'axe optique 70 de l'œil (voir figure 2).

En variante, la lentille de contact 100 de la présente invention peut comprendre des parties annulaires supplémentaires disposées entre la partie annulaire 12 et le segment 6 formant le ménisque lacrymal 17.

La lentille de contact 100 observée dans la figure 1 fait référence à une lentille de contact d'orthokératologie de l'état de l'art dans laquelle l'utilisation d'un seul segment central 1', d'un segment 2' et d'un segment final 3' qui forment le ménisque lacrymal de bord peut être observée.

La figure 6 correspond à un graphique montrant les courbes de puissance cornéenne relativement déterminées pour : a) la lentille de contact de la présente invention, b) la lentille de l'état de l'art, et c) la ligne de base de la puissance cornéenne ou de l'oeil avant le traitement.

La lentille de contact de l'état de l'art analysé correspond à une lentille de contact d'orthokératologie à géométrie inverse qui ne présente ni la combinaison des premier et deuxième segments 2, 3 ni une partie annulaire supplémentaire 12. Ces types de lentilles sont les lentilles classiques utilisées dans l'état de l'art pour diminuer la progression de la myopie et qui découlent du document US7025460.

La figure 6 montre les valeurs moyennes de puissance à un point par rapport au centre ou à l'axe optique 70. La courbe C représente les valeurs moyennes de puissance relative déterminées pour un oeil avant de recevoir un traitement pour réduire la progression de la myopie, la courbe B représente les valeurs moyennes de puissance relative d'un oeil après utilisation d'une lentille classique de l'état de l'art pendant une période de dix nuits, et la courbe A représente les valeurs moyennes de puissance relative d'un oeil après utilisation de la lentille de la présente invention pendant une période de dix nuits.

Comme on peut l'observer dans la figure 6, la courbe de puissance cornéenne montre que, dans le cas de la présente invention, dans la courbe a), on obtient une valeur de changement de puissance cornéenne dans tout le champ visuel de 35° nasal à 35° temporal, atteignant une crête maximale comprise entre 4 et 6 dioptries à 25° supérieure à celle obtenue en utilisant une lentille classique, qui est induite par l'utilisation de la partie annulaire 11 dans la lentille de contact 100 de la présente invention, ce qui permet, d'une part, d'avoir une correction adéquate dans la zone centrale 10 et, d'autre part, d'induire la formation du premier anneau d'augmentation de puissance 13 positionné dans la zone mi-périphérique et non pas dans la zone pupillaire, montrant que la lentille 100 de la présente invention induit un changement contrôlé de puissance plus important sur une plus grande surface.

Dans le cas de la lentille classique, l'utilisation d'un seul segment 1' modifie la vision centrale sur une grande surface de 6 mm, induisant une modification cornéenne d'augmentation de puissance loin de l'axe et par rapport à la quantité de myopie corrigée, ce qui diminue de manière significative l'efficacité du contrôle de la myopie, en particulier la myopie faible, et aussi les valeurs moyennes d'augmentation de puissance dans le champ de vision de 30° nasal à 30° temporal, inférieures à 4 dioptries, ne sont pas suffisantes pour réaliser un avancement adéquat de l'image périphérique et, donc, un traitement efficace du contrôle de la myopie.

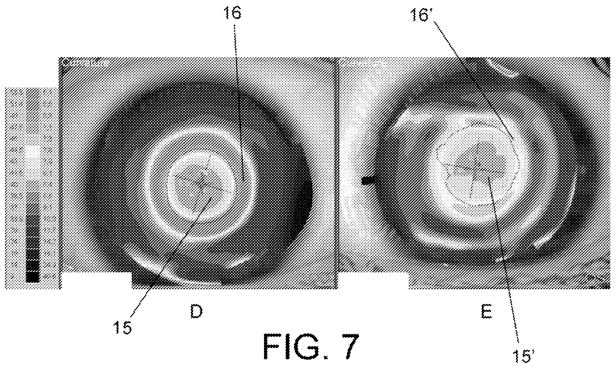

La figure 7 montre les cartes topographiques d'un patient créées après utilisation de la lentille de contact 100 de la présente invention (modèle D) et après utilisation de la lentille de contact classique définie précédemment de l'état de l'art (modèle E). Lesdites cartes topographiques sont créées en utilisant un topographe cornéen (Keratron, Optikon 2000, Rome) largement connu dans l'état de l'art. Dans les deux modèles, on peut observer une zone centrale 15, 15' qui correspond à la correction de la vision dans l'axe optique 70 ou de la vision centrale (sont centrées autour de la croix) et un anneau d'augmentation de puissance 16, 16' disposé autour et à l'extérieur de la pupille (représenté par la ligne mince, irrégulière, ronde).

Comme on peut l'observer dans la figure 7, dans la lentille classique, on n'obtient pas un anneau complet, uniformément défini, tandis que dans la lentille 100 de la présente invention, cette zone d'augmentation de puissance annulaire est clairement définie et visible, ce qui indique que dans cette zone annulaire une augmentation similaire de la puissance est obtenue partout, démontrant qu'en utilisant la lentille 100 de la présente invention, le moulage souhaité dans la zone spécifique de la cornée 30 est réalisé avec précision et contrôle, permettant ainsi un contrôle efficace de la myopie.

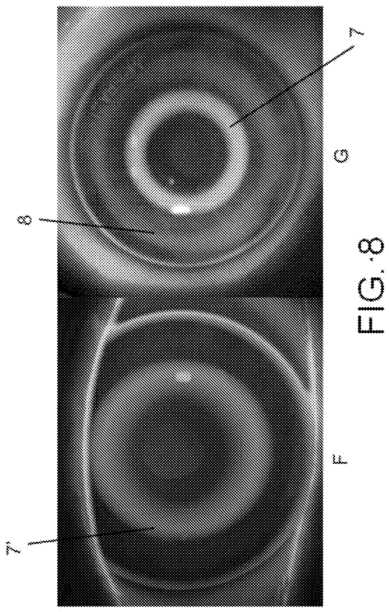

La figure 8 montre les images obtenues après ajout d'une solution de fluorescéine sodique à l'oeil du patient en présence d'une lentille de contact. L'image G montre l'oeil utilisant la lentille de contact 100 de la présente invention et l'image F montre l'oeil avec la lentille de contact de l'état de l'art ou une lentille classique disposée sur celle-ci. Les zones plus claires des images représentent des zones ayant une accumulation de larmes 7, 7', 8 plus importante.

Conformément aux images de la figure 8, il est facile d'observer les différences évidentes que représentent les deux zones d'accumulation de larmes annulaires 7, 7', 8 pour chaque lentille représentée. Dans le cas de la lentille classique (image F), on peut observer une plus grande zone d'accumulation de larmes 7' unique, alors que dans le cas de la lentille de contact 100 de la présente invention (image G), deux zones d'accumulation de larmes peuvent être clairement observées, la première zone d'accumulation de larmes 7 et la deuxième zone d'accumulation de larmes supplémentaire 8, où la couleur claire représente les zones ayant une fluorescence plus importante ou une accumulation ou un volume de larmes plus important(e). La zone interne est plus proche du centre et correspond à la zone d'accumulation de larmes 7 ayant une très haute définition, en raison d'une hauteur de larme contrôlée élevée h1, qui modifiera la surface de la cornée 30 de manière contrôlée en raison des forces hydrodynamiques induites et générant la surface optique responsable du ralentissement ou de l'inhibition de la progression de la myopie.

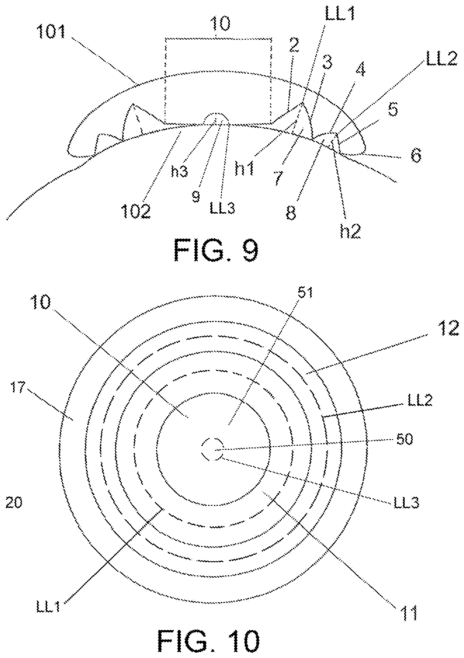

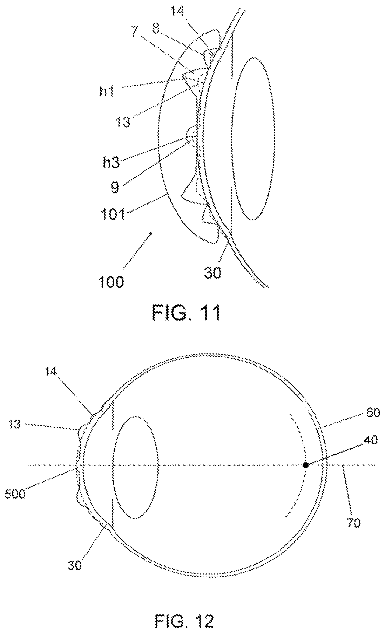

Selon un mode de réalisation alternatif et comme on peut l'observer dans les figures 9 à 13, la lentille de contact 100 peut comprendre une partie circulaire interne 50 et une partie annulaire externe 51, toutes deux disposées de manière concentrique entre elles et séparées par une ligne limite annulaire interne LL3 (voir figure 10) dans la zone centrale 10. La partie circulaire interne 50 est définie par une courbe à rayon de courbure inférieur au côté antérieur incurvé de la lentille (voir figure 9). Où la ligne limite annulaire interne LL3 est en contact avec l'épithélium cornéen 30, de sorte que la partie circulaire interne 50 définisse une zone d'accumulation de larmes interne 9 qui exerce une pression hydrodynamique négative sur l'épithélium cornéen, moulant la surface de la cornée 30 et créant une demi-sphère d'augmentation de puissance 500 qui définit une crête pour ladite accumulation de larmes interne 9 ayant une hauteur de larme h3 (voir les figures 11 et 12). Ladite demi-sphère d'augmentation de puissance 500 provoque un changement de puissance pour créer une réfraction des images et obtenir un avancement de celles-ci par rapport à la rétine. La hauteur de larme h3 a une valeur se trouvant dans une plage allant de 5 à 50 microns.

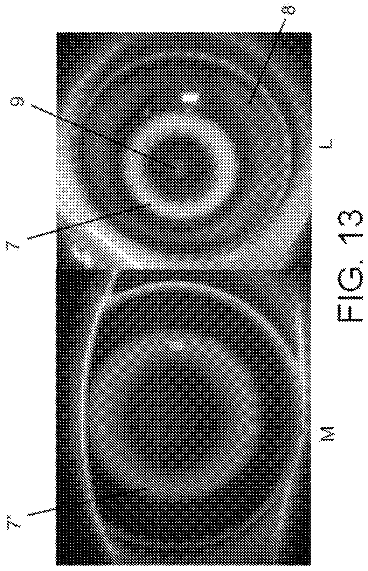

La figure 13 montre les images obtenues après ajout d'une solution de fluorescéine sodique à l'oeil d'un patient en présence d'une lentille de contact. Dans le cas de l'image L, l'oeil utilisant la lentille de contact 100 est représenté pour un mode de réalisation alternatif de la présente invention et, dans le cas de l'image M, l'oeil est représenté avec la lentille de contact de l'état de l'art ou la lentille classique disposée sur celui-ci. Les zones plus claires dans les images représentent des zones ayant une accumulation de larmes 7, 7', 8, 9 plus importante.

Conformément aux images de la figure 8, on peut observer les différences évidentes représentées par les trois zones d'accumulation de larmes annulaires 7, 7', 8, 9 pour chaque lentille représentée. Dans le cas de la lentille classique (image L), on peut observer une plus grande zone d'accumulation de larmes 7' unique, alors que dans le cas de la lentille de contact 100 de la présente invention, pour un mode de réalisation alternatif (image M), trois zones d'accumulation de larmes peuvent être clairement observées : la première zone d'accumulation de larmes 7, la deuxième zone d'accumulation de larmes supplémentaire 8 et une zone d'accumulation de larmes interne 9, où la couleur claire représente les zones ayant une fluorescence plus importante ou une accumulation ou un volume de larmes plus important(e).

Malgré le fait que l'on a fait référence à un mode de réalisation spécifique de l'invention, il est évident pour l'homme du métier que la lentille décrite est susceptible de plusieurs variations et modifications, et que tous les détails susmentionnés peuvent être remplacés par d'autres, techniquement équivalents, sans réduire l'étendue de protection définie par les revendications annexées.

## Revendications

1. Lentille de contact d'orthokératologie (100) pour contrôler la myopie, ladite lentille étant une lentille rigide à géométrie inverse comprenant un côté antérieur incurvé (101) et un côté postérieur (102) qui est destiné à être appliqué à un oeil, où ledit côté postérieur (102) définit :
- une zone centrale (10) adaptée pour coïncider avec la zone optique ou visuelle de l'œil ; et
- une zone périphérique (20), concentrique à ladite zone centrale (10), qui comprend une partie annulaire (11) définissant une zone d'accumulation de larmes (7) configurée pour exercer une pression hydrodynamique négative sur la surface de la cornée (30) en moulant la surface de la cornée (30) et en créant un anneau d'augmentation de puissance positive ;
**caractérisée en ce que** la partie annulaire comporte :
- un premier segment (2) qui s'étend de manière concentrique par rapport à la zone centrale (10), radialement par rapport au centre géométrique qui définit la courbure du côté postérieur (102), vers le côté antérieur incurvé (101) jusqu'à une ligne limite annulaire (LL1) ; et
- un deuxième segment (3) qui s'étend à partir de ladite ligne limite annulaire (LL1), de manière concentrique par rapport à la zone centrale, le deuxième segment (3) s'étendant dans la direction de la surface de la cornée (30) ;
où le premier segment (2), le deuxième segment (3) et la zone centrale (10) forment une ligne brisée, de sorte que la ligne limite annulaire (LL1) définisse une crête pour la zone d'accumulation de larmes (7) ayant une hauteur de larme (h1).

2. Lentille de contact (100) selon la revendication 1, dans laquelle les premier et deuxième segments (2, 3) forment la crête dont le sommet est un point singulier.

3. Lentille de contact (100) selon l'une quelconque des revendications précédentes, dans laquelle ladite hauteur de larme (h1) a une valeur se trouvant dans la plage allant de 30 à 150 microns.

4. Lentille de contact (100) selon l'une quelconque des revendications précédentes, dans laquelle la zone centrale (10) et le premier segment (2) ont une intersection formée par un point singulier.

5. Lentille de contact (100), selon l'une quelconque des revendications précédentes, dans laquelle la ligne limite annulaire (LL1) est située à une distance radiale comprise entre 1,5 mm et 3,5 mm du centre géométrique de la zone centrale (10).

6. Lentille de contact (100), selon l'une quelconque des revendications précédentes, dans laquelle ladite zone centrale (10) est essentiellement plate.

7. Lentille de contact (100), selon l'une quelconque des revendications 1 à 5, dans laquelle ladite zone centrale (10) est essentiellement incurvée.

8. Lentille de contact (100) selon l'une quelconque des revendications précédentes, dans laquelle ladite zone périphérique (20) comprend également :
une partie annulaire supplémentaire (12) définissant une zone d'accumulation de larmes supplémentaire (8) configurée pour exercer une pression hydrodynamique négative sur la surface de la cornée (30) en moulant la surface de la cornée (30) et en créant un anneau supplémentaire d'augmentation de puissance positive, qui comporte :
- un premier segment (4) qui s'étend de manière concentrique par rapport à la zone centrale (10), radialement par rapport au centre géométrique qui définit la courbure du côté postérieur (102), vers le côté antérieur incurvé (101) jusqu'à une ligne limite annulaire supplémentaire (LL2) ; et
- un deuxième segment (5) qui s'étend à partir de ladite ligne limite annulaire (LL2), de manière concentrique par rapport à la zone centrale (10), le deuxième segment (5) étant configuré pour s'étendre jusqu'à un point de contact avec la surface de la cornée (30) ;
où le premier segment (4) et le deuxième segment (5) forment une ligne brisée, de sorte que la ligne limite annulaire supplémentaire (LL2) définisse une crête pour la zone d'accumulation de larmes supplémentaire (8) ayant une hauteur de larme (h2).

9. Lentille de contact (100) selon la revendication précédente, dans laquelle la zone d'accumulation de larmes supplémentaire (8) a une hauteur de larme (h2) inférieure à la hauteur de larme (h1) de la zone d'accumulation de larme (7) de la partie annulaire (11).

10. Lentille de contact (100), selon l'une quelconque des revendications 8 à 9, dans laquelle la ligne limite annulaire supplémentaire (LL2) est située à une distance radiale comprise entre 2,5 mm et 5 mm par rapport au centre géométrique de la zone centrale (10).

11. Lentille de contact (100), selon l'une quelconque des revendications 8 à 10, qui comprend dans la zone périphérique (20) un segment adjacent (6) à la partie annulaire supplémentaire (12) qui s'étend vers le côté antérieur incurvé (101) jusqu'à un bord de liaison annulaire avec celui-ci, formant le ménisque lacrymal de bord (17) qui permet l'échange de larme sous la lentille lors du clignement.

12. Lentille de contact (100), selon la revendication précédente, qui comprend une ou plusieurs partie(s) annulaire(s) supplémentaire(s) disposée(s) entre la partie annulaire supplémentaire (12) et le segment (6) qui forme le ménisque lacrymal (17).

13. Lentille de contact (100), selon l'une quelconque des revendications précédentes, dans laquelle la zone centrale (10) comprend une partie circulaire interne (50) et une partie annulaire externe, toutes deux disposées de manière concentrique entre elles et séparées par une ligne limite annulaire interne (LL3), dans laquelle ladite partie circulaire interne (50) est définie par une courbe à rayon de courbure inférieur au côté antérieur incurvé de la lentille, avec ladite ligne limite annulaire interne (LL3) étant en contact avec l'épithélium cornéen (30), de sorte que la partie circulaire interne (50) définisse une zone d'accumulation de larmes interne (9) qui exerce une pression hydrodynamique négative sur l'épithélium cornéen, moulant la surface de la cornée (30) et créant une demi-sphère d'augmentation de puissance (500) qui définit une crête pour ladite zone d'accumulation de larmes interne (9) ayant une hauteur de larme (h3).

## Patentansprüche

1. Orthokeratologische Kontaktlinse (100) zur Bekämpfung von Kurzsichtigkeit, wobei die Linse eine starre Linse mit umgekehrter Geometrie ist, die eine gekrümmte Vorderseite (101) und eine Rückseite (102) aufweist, die dazu bestimmt ist, auf ein Auge aufgebracht zu sein, wobei die Rückseite (102) Folgendes definiert:
- einen zentralen Bereich (10), der angepasst ist, um mit dem optischen oder visuellen Bereich des Auges zusammenzufallen; und
- einen peripheren Bereich (20), der konzentrisch zu der zentralen Zone (10) verläuft und einen ringförmigen Teil (11) umfasst, der einen Tränenansammlungsbereich (7) definiert, die dazu konfiguriert ist, einen negativen hydrodynamischen Druck auf die Hornhautoberfläche (30) auszuüben, wodurch die Hornhautoberfläche (30) geformt und ein Ring zur Steigerung der positiven Leistung erzeugt werden;
**dadurch gekennzeichnet, dass** der ringförmige Teil Folgendes umfasst:
- ein erstes Segment (2), das sich konzentrisch in Bezug zum zentralen Bereich (10) und radial in Bezug zum geometrischen Zentrum, das die Krümmung der Rückseite (102) definiert, in Richtung der gekrümmten Vorderseite (101) bis zu einer ringförmigen Begrenzungslinie (LL1) erstreckt; und
- ein zweites Segment (3), das sich ausgehend von der ringförmigen Begrenzungslinie (LL1) konzentrisch in Bezug zum zentralen Bereich erstreckt, wobei das zweite Segment (3) sich in Richtung der Hornhautoberfläche (30) erstreckt;
wobei das erste Segment (2), das zweite Segment (3) und der zentrale Bereich (10) eine unterbrochene Linie bilden, so dass die ringförmige Begrenzungslinie (LL1) einen Grat für den Tränenansammlungsbereich (7) mit einer Tränenhöhe (h1) definiert.

2. Kontaktlinse (100) nach Anspruch 1, wobei das erste und das zweite Segment (2, 3) den Grat bilden, dessen Spitze ein singulärer Punkt ist.

3. Kontaktlinse (100) nach einem der vorhergehenden Ansprüche, wobei die Tränenhöhe (h1) einen Wert im Bereich von 30 bis 150 Mikrometer aufweist.

4. Kontaktlinse (100) nach einem der vorhergehenden Ansprüche, wobei der zentrale Bereich (10) und das erste Segment (2) eine durch einen singulären Punkt gebildete Schnittstelle aufweisen.

5. Kontaktlinse (100) nach einem der vorhergehenden Ansprüche, wobei die ringförmige Begrenzungslinie (LL1) in einem radialen Abstand zwischen 1,5 mm und 3,5 mm von dem geometrischen Zentrum des zentralen Bereichs (10) angeordnet ist.

6. Kontaktlinse (100) nach einem der vorhergehenden Ansprüche, wobei der zentrale Bereich (10) im Wesentlichen flach ist.

7. Kontaktlinse (100) nach einem der Ansprüche 1 bis 5, wobei der zentrale Bereich (10) im Wesentlichen gekrümmt ist.

8. Kontaktlinse (100) nach einem der vorhergehenden Ansprüche, wobei der periphere Bereich (20) ebenfalls Folgendes umfasst:
einen zusätzlichen ringförmigen Teil (12), der einen zusätzlichen Tränenansammlungsbereich (8) definiert, der dazu konfiguriert ist, einen negativen hydrodynamischen Druck auf die Hornhautoberfläche (30) auszuüben, wodurch die Hornhautoberfläche (30) geformt und ein zusätzlicher Ring zur Steigerung der positiven Leistung erzeugt werden, der Folgendes umfasst:
- ein erstes Segment (4), das sich konzentrisch in Bezug zum zentralen Bereich (10) und radial in Bezug zum geometrischen Zentrum, das die Krümmung der Rückseite (102) definiert, in Richtung der gekrümmten Vorderseite (101) bis zu einer zusätzlichen ringförmigen Begrenzungslinie (LL2) erstreckt; und
- ein zweites Segment (5), das sich ausgehend von der ringförmigen Begrenzungslinie (LL2) konzentrisch in Bezug zum zentralen Bereich (10) erstreckt, wobei das zweite Segment (5) dazu konfiguriert ist, sich bis zu einem Kontaktpunkt mit der Hornhautoberfläche (30) zu erstrecken;
wobei das erste Segment (4) und das zweite Segment (5) eine unterbrochene Linie bilden, so dass die zusätzliche ringförmige Begrenzungslinie (LL2) einen Grat für den zusätzlichen Tränenansammlungsbereich (8) mit einer Tränenhöhe (h2) definiert.

9. Kontaktlinse (100) nach dem vorhergehenden Anspruch, wobei der zusätzliche Tränenansammlungsbereich (8) eine Tränenhöhe (h2) aufweist, die kleiner ist als die Tränenhöhe (h1) des Tränenansammlungsbereichs (7) des ringförmigen Teils (11).

10. Kontaktlinse (100) nach einem der Ansprüche 8 bis 9, wobei die zusätzliche ringförmige Begrenzungslinie (LL2) in einem radialen Abstand, der zwischen 2,5 mm und 5 mm beträgt, in Bezug zum geometrischen Zentrum des zentralen Bereichs (10) angeordnet ist.

11. Kontaktlinse (100), nach einem der Ansprüche 8 bis 10, die in dem peripheren Bereich (20) ein benachbartes Segment (6) zum zusätzlichen ringförmigen Teil (12) umfasst, das sich in Richtung der gekrümmten Vorderseite (101) bis zu einem ringförmigen Verbindungsrand damit erstreckt, der den Tränenmeniskusrand (17) bildet, der beim Blinzeln einen Tränenaustausch unter der Linse ermöglicht.

12. Kontaktlinse (100) nach dem vorhergehenden Anspruch, die einen oder mehrere zusätzliche ringförmige Teile umfasst, die zwischen dem zusätzlichen ringförmigen Teil (12) und dem Segment (6), das den Tränenmeniskus (17) bildet, angeordnet sind.

13. Kontaktlinse (100) nach einem der vorhergehenden Ansprüche, wobei der zentrale Bereich (10) einen inneren kreisförmigen Teil (50) und einen äußeren ringförmigen Teil umfasst, die beide konzentrisch zueinander und durch eine innere ringförmige Begrenzungslinie (LL3) getrennt angeordnet sind, wobei der innere kreisförmige Teil (50) durch eine Kurve mit einem Krümmungsradius definiert ist, der kleiner ist als die gekrümmte Vorderseite der Linse, wobei die innere ringförmige Begrenzungslinie (LL3) in Kontakt mit dem Hornhautepithel (30) steht, so dass der innere kreisförmige Teil (50) einen inneren Tränenansammlungsbereich (9) definiert, der einen negativen hydrodynamischen Druck auf das Hornhautepithel ausübt, wodurch die Hornhautoberfläche (30) geformt und eine Halbkugel zur Steigerung der Leistung (500), die einen Grat für den inneren Tränenansammlungsbereich (9) mit einer Tränenhöhe (h3) definiert, erzeugt werden.

## Claims

1. An orthokeratology contact lens (100) for controlling myopia, said lens being a reverse-geometry rigid lens comprising an incurved anterior side (101) and a posterior side (102) which is intended to be applied to an eye, where said posterior side (102) defines:
- a central area (10) adapted to coincide with the optical or visual area of the eye, and
- a peripheral area (20), concentric with said central area (10), which comprises an annular portion (11) defining a teardrops accumulation area (7) configured to exert a negative hydrodynamic pressure on the surface of the cornea (30) by conforming the surface of the cornea (30) and by creating a positive power amp-up ring;
**characterized in that** the annular portion includes:
- a first segment (2) which extends concentrically with respect to the central area (10), radially with respect to the geometric center which defines the curvature of the posterior side (102), towards the incurved anterior side (101) up to an annular border line (LL1); and
- a second segment (3) which extends from said annular border line (LL1), concentrically with respect to the central area, the second segment (3) extending in the direction of the surface of the cornea (30);
wherein the first segment (2) and the second segment (3) and the central area (10) form a broken line, such that the annular border line (LL1) defines a ridge for the teardrops accumulation area (7) having a teardrop height (h1).

2. The contact lens (100) according to claim 1, wherein the first and second segments (2, 3) form the ridge whose apex is a singular point.

3. The contact lens (100) according to any one of the preceding claims, wherein said teardrop height (h1) has a value within the range from 30 to 150 microns.

4. The contact lens (100) according to any one of the preceding claims, wherein the central area (10) and the first segment (2) have an intersection formed by a singular point.

5. The contact lens (100) according to any one of the preceding claims, wherein the annular border line (LL1) is located at a radial distance comprised between 1.5 mm and 3.5 mm from the geometric center of the central area (10).

6. The contact lens (100) according to any one of the preceding claims, wherein said central area (10) is essentially flat.

7. The contact lens (100) according to any one of claims 1 to 5, wherein said central area (10) is essentially incurved.

8. The contact lens (100) according to any one of the preceding claims, wherein said peripheral area (20) also comprises:
a supplemental annular portion (12) defining a supplemental teardrops accumulation area (8) configured to exert a negative hydrodynamic pressure on the surface of the cornea (30) by conforming the surface of the cornea (30) and by creating a supplemental positive power amp-up ring, which includes:
- a first segment (4) which extends concentrically with respect to the central area (10), radially with respect to the geometric center which defines the curvature of the posterior side (102), towards the incurved anterior side (101) up to a supplemental annular border line (LL2); and
- a second segment (5) which extends from said annular border line (LL2), concentrically with respect to the central area (10), the second segment (5) being configured to extend up to a point of contact with the surface of the cornea (30);
where the first segment (4) and the second segment (5) form a broken line, such that the supplemental annular border line (LL2) defines a ridge for the supplemental teardrops accumulation area (8) having a teardrop height (h2).

9. The contact lens (100) according to the preceding claim, wherein the supplemental teardrops accumulation area (8) has a teardrop height (h2) smaller than the teardrop height (h1) of the teardrops accumulation area (7) of the annular portion (11).

10. The contact lens (100) according to any one of claims 8 to 9, wherein the supplemental annular border line (LL2) is located at a radial distance comprised between 2.5 mm and 5 mm with respect to the geometric center of the central area (10).

11. The contact lens (100) according to any one of claims 8 to 10, which comprises in the peripheral area (20) a segment (6) adjacent to the supplemental annular portion (12) which extends towards the incurved anterior side (101) up to an annular edge for connection with the latter, forming the edge lacrimal meniscus (17) which enables the teardrop exchange beneath the lens when winking.

12. The contact lens (100) according to the preceding claim, which comprises one or several supplemental annular portion(s) disposed between the supplemental annular portion (12) and the segment (6) that forms the lacrimal meniscus (17).

13. The contact lens (100) according to any one of the preceding claims, wherein the central area (10) comprises an inner circular portion (50) and an outer annular portion, both disposed concentrically with one another and separated by an inner annular border line (LL3), wherein said inner circular portion (50) is defined by a curve with a radius of curvature smaller than the incurved anterior side of the lens, with said inner annular border line (LL3) being in contact with the corneal epithelium (30), such that the inner circular portion (50) defines an inner teardrops accumulation area (9) which exerts a negative hydrodynamic pressure on the corneal epithelium, conforming the surface of the cornea (30) and creating a power amp-up hemisphere (500) which defines a ridge for said inner teardrops accumulation area (9) having a teardrop height (h3).
